# EUROPÄISCHE PATENTSCHRIFT

(11) **EP 0 372 442 B1**
(45) Veröffentlichungstag und Bekanntmachung des Hinweises auf die Patenterteilung: **26.01.1994**
(21) Anmeldenummer: 89122289.5
(22) Anmeldetag: 02.12.1989
(51) Int. Cl.: H03K 17/94, H05B 39/00

(54) **Schaltgerät**
Switching device
Appareil de commutation

(30) Priorität: 08.12.1988 DE 8815289 U
(43) Veröffentlichungstag der Anmeldung: 13.06.1990
(73) Patentinhaber: Asea Brown Boveri Aktiengesellschaft, 68309 Mannheim (DE)
(72) Erfinder: Ullmann, Raimund, D-2805 Stuhr 3 (DE); Ebeling, Wolfgang, D-2360 Fahrenkrug (DE)
(74) Vertreter: Rupprecht, Klaus, Dipl.-Ing.

(56) Entgegenhaltungen:
- CH-A- 662 223
- DE-A- 1 490 471
- FR-A- 2 449 994
- GB-A- 2 155 708
- US-A- 4 449 074
- US-A- 4 663 521
- FUNKSCHAU Band 58.Nr.15,Juli 1986,Seiten 64-67,München,D; K.HOERNKE:"Universelle Lichtschranke"
- SIEMENS ENERGY & AUTOMATION Band IX,Nr.1,Januar-Februar 1987,Seiten 37-39,Berlin,D; B.SCHADE: " Convenient Remote-Control Light Switching Saves Energy"
- PATENT ABSTRACTS OF JAPAN Band 4,Nr.6 (M-88),18.Januar 1980;

## Beschreibung

Die Erfindung betrifft eine Schaltungsanordnung nach dem Oberbegriff des Anspruchs 1.

Aus der DE-OS 14 90 471 ist eine Schaltungsanordnung zur An- bzw. Abschaltung eines Verbrauchers, insbesondere einer Beleuchtungsanlage, in Abhängigkeit von der Lichtstärke bekannt. Hierbei wird die Lichtstärke von einem Photoelement aufgenommen, welches über eine Auswerteelektronik den Schaltkontakt eines elektromagnetischen Relais ansteuert, wobei der Schaltkontakt seinerseits eine Beleuchtungsanlage ein- oder ausschaltet.

Bei bestimmten Applikationen (z.B. Beleuchtungssteuerung in der Gebäudeinstallationstechnik) ist es jedoch wirtschaftlich nachteilig, wenn der Ort, wo sich der Helligkeitssensor befindet und der Ort, wo sich der Schaltkontakt des Schaltgeräts befindet mit Verbindungsleitungen überbrückt werden muß. Ferner ist nachteilig, daß bei bekannten Beleuchtungssteuerungen die Schaltgeräte noch nicht in handelsübliche Unterputz-Wandeinbaudosen integriert werden können.

Aus der GB-A-2 155 708 ist es zwar bekannt mittels eines Lichtsensors die Helligkeit zu erfassen und in Abhängigkeit hiervon über einen Infrarotsender einen Infrarotempfänger zu beaufschlagen, der seinerseits bestimmte Lampen einschaltet, doch sind die Infrarotempfänger im Lampensockel eingebaut. Hierbei ist kein Schalter zur Handbetätigung vorgesehen und die räumliche Zuordnung zur Lampe schließt ein gemeinsames Schalten räumlich getrennter Lampen aus. Ähnlich aufgebaut ist auch eine aus "Funkschau Band 58, Nr. 15, Juli 1986, Seiten 64 bis 67" bekannte Lichtschranke, die mit einer Dämmerungs-Einschaltautomatik arbeitet. Die Lichtschranke kann im Bereich eines Hauseingangs zum selbsttätigen Schalten von Beleuchtungseinrichtungen eingesetzt werden.

Es ist deshalb Aufgabe vorliegender Erfindung, die im Stand der Technik bekannte Schaltungsanordnung für Zwecke der Gebäudeinstallationstechnik so auszubilden, daß bei fest vorgegeben installierten und manuell ein- bzw. ausschaltbaren Schaltgeräten eine zusatzlich in Abhängigkeit vom Sonnenlicht zu steuernde Schaltung installierter Beleuchtungskörper erfolgen kann.

Diese Aufgabe wird erfindungsgemäß durch die im Anspruch 1 näher gekennzeichneten Merkmale gelöst.

Erfindungsgemäß wird erreicht, daß der Sonnenlicht-Helligkeitssensor kostengünstig an Stellen installiert werden kann, die es ermöglichen, das Tageslicht vom künstlichen Licht der vorhandenen Raumbeleuchtung einwandfrei zu unterscheiden. Hierdurch kann eine individuell einzustellende und Verdrahtungsaufwand sparende Beleuchtung des zu überwachenden Raums erreicht werden. Insbesondere in Bürogebäuden wird nämlich künstliches Licht zwar eingeschaltet, wenn das natürliche Licht einen individuell als optimal empfundenen Helligkeitswert unterschreitet, nicht aber wieder ausgeschaltet, wenn der zwischenzeitlich erreicht Helligkeitswert des natürlichen Lichts wieder ausreichend wäre.

Die erfindungsgemäße Schaltungsanordnung kann daher dazu beitragen, die insgesamt auflaufenden Beleutungskosten abzusenken.

Vorteilhafte Weiterbildungen des Erfindungsgegenstandes sind in den Unteransprüchen näher gekennzeichnet.

Anhand eines in der Zeichnung dargestellten Ausführungsbeispiels soll die Erfindung näher erläutert und beschrieben werden.

Es zeigen:
- Figur 1:: Ein Prinzipschaltbild der erfindungsgemäßen Schaltungsanordnung, mit einem IR-Sendeteil 2 und einem IR-Empfangsteil 10,
- Figur 2:: den in einem Gehäuse 7 untergebrachten Sendeteil 2 der erfindungsgemäßen Schaltungsanordnung in Kompaktbauweise nebst Befestigungsbügel 8,
- Figur 3:: ein üblicherweise in der Hausinstallationstechnik installiertes Schaltgerät 1 für Beleuchtungskörper nebst integriertem Infrarot-Empfänger 11.

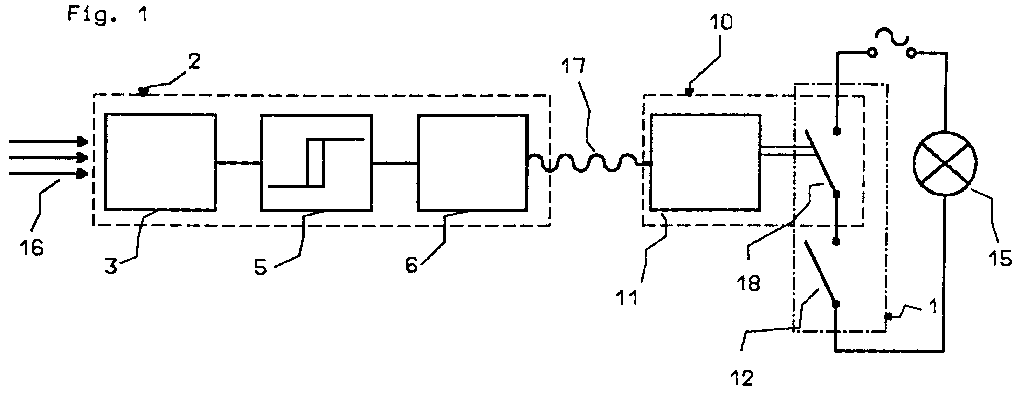

Figur 1 zeigt einen Sonnenlicht-Helligkeitssensor 3 (z.B. ein Photoelement), auf welchen Sonnenlichtstrahlung 16 fällt. Der dem Helligkeitswert des natürlichen Sonnenlichts entsprechend erzeugte Stromwert wird einem Schwellwertschalter 5 zugeführt, welcher beim Überschreiten eines vorgegebenen, individuell einzustellenden Werts einen nachgeschalteten Infrarot-Sender 6 veranlaßt, einen vorzugsweise codierten (PCM=Pulscodemodulation) Infrarot-Strahlungsimpuls 17 abzugeben. Der von einem Infrarot-Empfänger 11 aufgenommene Infrarot-Strahlungsimpuls 17 wird einem ersten Schaltkontakt 18 vorzugsweise einem Halbleiter-Schalter zugeführt, welcher zusätzlich in Serie zu einem bereits installierten manuell betätigbaren zweiten Schaltkontakt 12 des Schaltgeräts 1 in die Stromversorgungsleitung für einen oder mehrere Beleuchtungskörper 15 eingeschleift ist.

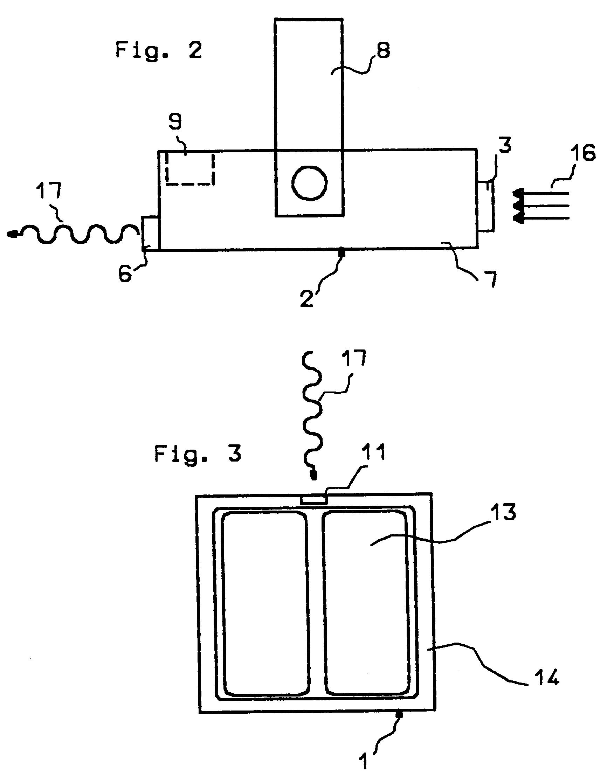

Figur 2 zeigt ein an einem Befestigungsbügel 8 schwenkbar gelagertes Gehäuse 7 des Sendeteils 2 der erfindungsgemäßen Schaltungsanordnung. Der Befestigungsbügel 8 wird vorzugsweise in Fensternähe angebracht, so daß die vorhandene Tageslichthelligkeit gut detektiert werden kann. Das Gehäuse 7 muß so justiert werden, daß der den Infrarot-Sender 6 verlassende Infrarot-Strahlungsimpuls 17 auf den am Schaltgerät 1 integrierten Infrarot-Empfänger 11 trifft. Die Stromversorgung des Sendeteils 2 wird wahlweise durch einen Batterie-oder Netzanschluß 9 bereitgestellt. Der Befestigungsbügel 8 wird so ausgelegt, daß die Halterung des Sendeteils 2 sowohl an Betondecken als auch an abgehängten Decken möglich ist.

Figur 3 zeigt ein in der Gebäudebeleuchtungstechnik üblicherweise installiertes Schaltgerät 1 mit einem Abdeckrahmen 14 und einer manuell betätigbaren Schaltwippe 13, welche ihrerseits den zweiten Schaltkontakt 12 schaltet.

Durch die Hintereinanderschaltung der beiden Schaltkontakte 12,18 wird erreicht, daß der Stromversorgungskreis für einen Beleuchtungskörper 15 nach Aktivierung der erfindungsgemäßen Schaltungsanordnung unterbrochen wird, auch wenn der manuell betätigbare Schaltkontakt 12 eingeschaltet ist. Sollte der an der erfindungsgemäßen Schaltungsanordnung eingestellte Helligkeitswert im zu überwachenden Raum subjektiv als zu niedrig empfunden werden, kann durch Verstellen des Schwellwerts am Schwellwertschalter 5 die Aktivierungsschwelle der Schaltungsanordnung heraufgesetzt werden.

## Patentansprüche

1. Schaltungsanordnung mit einem Infrarot-Sendeteil (2) und einem Infrarot-Empfangsteil (10), wobei im Infrarot-Sendeteil (2) ein Sonnenlicht-Helligkeitssensor (3), eine mit mindestens einem Schwellwertschalter (5) versehene Auswerteelektronik und ein dieser nachgeschalteter Infrarot-Sender (6) vorgesehen sind und wobei der Infrarot-Empfangsteil (10) mit einem Infrarot-Empfänger (11) und einem ersten Schaltkontakt (18), vorzugsweise einem Halbleiterschalter, ausgestattet ist, **dadurch gekennzeichnet,** daß der Empfangsteil (10) an einem Schaltgerät (1) mit einem manuell betätigbaren zweiten Schaltkontakt (12) angebracht ist und der in Abhängigkeit von einem vom Sender (6) abgegebenen Infrarot-Strahlungsimpuls (17) betätigte erste Schaltkontakt (18) in Serie zum zweiten Schaltkontakt (12) in die Stromversorgungsleitung für einen oder mehrere Beleuchtungskörper (15) eingeschleift ist.

2. Schaltungsanordnung nach Anspruch 1, dadurch gekennzeichnet, daß der Schwellwert des zum Infrarot-Sendeteil (2) gehörigen Schwellwertschalters (5) entsprechend der gewünschten Aktivierungsschwelle einstellbar ist.

3. Schaltungsanordnung nach einem der vorherigen Ansprüche, dadurch gekennzeichnet, daß das Schaltgerät (1) zur Betätigung des zweiten Schaltkontaktes (12) mit einer Schaltwippe (13) ausgestattet ist und einen Abdeckrahmen (14) besitzt und das Infrarot-Empfangsteil (10) integriert ist.

4. Schaltungsanordnung nach einem der vorhergehenden Ansprüche, dadurch gekennzeichnet, daß ein Gehäuse (7) des Sendeteils (2) an einem Befestigungsbügel (8) richtungsschwenkbar ist.

5. Schaltungsanordnung nach einem der vorhergehenden Ansprüche, dadurch gekennzeichnet, daß zum Zwecke der Stromversorgung des Sendeteils (2) ein Netz- oder Batterieanschluß (9) vorgesehen ist.

## Claims

1. Circuit arrangement having an infrared transmitting section (2) and an infrared receiving section (10), a sunlight brightness sensor (3), evaluation electronics which are provided with at least one threshold-value switch (5), and an infrared transmitter (6) connected downstream of said electronics being provided in the infrared transmitting section, and the infrared receiving section (10) being equipped with an infrared receiver (11) and a first switching contact (18), preferably a semiconductor switch, characterized in that the receiving section (10) is fitted on a switching apparatus (1) having a manually operable second switching contact (12), and the first switching contact (18), operated as a function of an infrared radiation pulse emitted by the transmitter (6), is looped-in in series with the second switching contact (12) into the power supply cable for one or more luminaires (15).

2. Circuit arrangement according to Claim 1, characterized in that the threshold value of the threshold-value switch (5), belonging to the infrared transmitting section (2), is adjustable according to the desired activation threshold.

3. Circuit arrangement according to one of the preceding claims, characterized in that the switching apparatus (1) is equipped with a switch rocker (13) for operating the second switching contact (12) and has a covering frame (14), and the infrared receiving section is integrated.

4. Circuit arrangement according to one of the preceding claims, characterized in that a housing (7) of the transmitting section (2) is directionally pivottable on a mounting bracket (8).

5. Circuit arrangement according to one of the preceding claims, characterized in that a mains or battery connection (9) is provided for the purpose of supplying power to the transmitting section.

## Revendications

1. Circuit comportant une partie émetteur d'infra-rouges (2) et une partie récepteur d'infra-rouges (10), un capteur de luminosité (3) pour la lumière solaire, une électronique d'exploitation avec au moins un commutateur à seuil (5) et un émetteur d'infra-rouges (6) monte à la suite de celle-ci étant prévus dans la partie émetteur d'infra-rouges (2) et la partie récepteur d'infra-rouges (10) comprenant un récepteur d'infra-rouges (11) et un premier contact de commutation (18), de préférence un commutateur à semi-conducteur, caractérisé par le fait que la partie récepteur d'infra-rouges (10) est montée sur un dispositif de commutation (1) avec un deuxième contact de commutation (12) qui peut être actionné manuellement et par le fait que le premier contact de commutation (18) qui est actionné en fonction d'une impulsion infra-rouge (17) délivrée par l'émetteur (6) est branché en série avec le deuxième contact de commutation (12) dans la ligne d'alimentation en courant électrique pour un ou plusieurs appareils d'éclairage (15).

2. Circuit selon la revendication 1, caractérisé par le fait que la valeur de seuil du commutateur à seuil (5) intégré dans la partie émetteur d'infra-rouges (2) peut être réglée en fonction du seuil d'actionnement souhaité.

3. Circuit selon l'une de revendications précédentes, caractérisé par le fait que le dispositif de commutation (1) pour l'actionnement du deuxième contact de commutation (12) comporte une bascule (13) et possède un cache (14) et que la partie récepteur d'infra-rouges (10) est intégrée.

4. Circuit selon l'une des revendications précédentes, caractérisé par le fait qu'un boîtier (7) de la partie émetteur (2) est monté sur un étrier de fixation (8) de manière à pouvoir être orienté.

5. Circuit selon l'une des revendications précédentes, caractérisé par le fait qu'il est prévu pour l'alimentation de la partie émetteur (2) une connexion au réseau ou à des batteries.
